# FASCICULE DE BREVET EUROPEEN

(11) **EP 0 499 513 B1**
(45) Date de publication et mention de la délivrance du brevet: **28.12.1994**
(21) Numéro de dépôt: 92400314.8
(22) Date de dépôt: 07.02.1992
(51) Int. Cl.: B30B 15/06, B30B 15/34, B29C 43/52

(54) **Dispositif à conduction thermique variable, prévu pour être intercalé entre un plateau de chauffage et un plateau de refroidissement sur une machine telle qu'une presse**
Zwischen eine geheizte und eine gekühlte Platte einer Maschine, bzw. Presse, einbringbare Vorrichtung mit einstellbarer Wärmeleitung
Device with variable thermal conductivity for placing between a heating and a cooling platen of a machine such as a press

(30) Priorité: 11.02.1991 FR 9101535
(43) Date de publication de la demande: 19.08.1992
(73) Titulaire: AEROSPATIALE Société Nationale Industrielle, 75781 Paris Cédex 16 (FR)
(72) Inventeur: Cusson, Philippe, F-75018 Paris (FR); Sixdeniers, Eric, F-75018 Paris (FR)
(74) Mandataire: Dubois-Chabert, Guy

(56) Documents cités:
- US-A- 1 942 251
- US-A- 2 532 501
- US-A- 2 874 751
- US-A- 4 550 057
- PATENT ABSTRACTS OF JAPAN, vol. 6, no. 236 (M-173)[1114], 25 novembre 1982; & JP-A-57 135 137 (ASAHI DOW K.K.) 20-08-1982

## Description

L'invention concerne un dispositif à conduction thermique variable, prévu pour être intercalé entre un plateau chauffant et un plateau de refroidissement d'une machine, telle qu'une presse, permettant d'appliquer un effort de compression entre ces plateaux.

De façon plus précise, le dispositif selon l'invention est conçu afin d'assurer une isolation thermique aussi efficace que possible entre les plateaux lorsque ces derniers ne sont pas pressés l'un contre l'autre et pour assurer au contraire une conduction thermique maximale entre les plateaux lorsqu'un effort de compression leur est appliqué.

Un ou plusieurs dispositifs ainsi conçus peuvent notamment être utilisés sur une presse équipée d'au moins un plateau chauffant et d'au moins un plateau de refroidissement, lorsque la fabrication de la pièce nécessite le chauffage de celle-ci, préalablement à une phase d'application de pression et de refroidissement.

Un premier exemple d'application du dispositif selon l'invention concerne la fabrication d'une pièce par thermoformage, qui comporte une phase de chauffage de la pièce, suivie d'une phase de pressage, à une pression qui excède de préférence 1 MPa, au cours de laquelle la pièce est refroidie.

Un deuxième exemple d'application du dispositif selon l'invention concerne la fabrication d'un matériau composite à matrice métallique, qui s'effectue dans un moule à l'intérieur duquel sont placés une armature préformée destinée à servir de renfort à la pièce, ainsi que des clinquants métalliques destinés à former la matrice. Au cours d'une première étape, le moule est chauffé en quelques heures afin d'assurer la fusion des clinquants métalliques, sans qu'aucune pression ne soit appliquée. Au cours d'une deuxième étape très courte (quelques minutes), une pression est appliquée sur la pièce, afin que le métal à l'état liquide imprègne la matrice métallique. Enfin, l'ensemble est refroidi, en maintenant la pression appliquée sur la pièce, et ce de façon homogène, puisque les calories s'échappent de façon uniforme de toute la surface du moule.

Dans l'état actuel de la technique, lorsque la fabrication d'une pièce nécessite de soumettre celle-ci successivement à un chauffage sans pressage, puis à un pressage accompagné d'un refroidissement, il n'existe pas de solution technologique satisfaisante du point de vue thermique.

Ainsi, lorsque le plateau chauffant est directement en contact avec le plateau de la presse équipé de moyens de refroidissement, il se produit une perte de chaleur importante par conduction thermique, lors de la phase de chauffage.

A l'inverse, si l'on place entre le plateau de la presse et l'outillage un matériau thermiquement isolant, c'est le refroidissement de la pièce qui n'est pas réalisé dans de bonnes conditions, voir par example US-A-4550057.

L'invention a précisément pour objet un dispositif à conduction thermique variable dont la conception lui permet d'être thermiquement isolant tant qu'il n'est pas soumis à un effort de compression déterminé, puis de devenir thermiquement conducteur lorsqu'un tel effort de compression lui est appliqué.

Conformément à l'invention, ce résultat est obtenu au moyen d'un dispositif à conduction thermique variable, prévu pour être intercalé entre un plateau chauffant et un plateau de refroidissement d'une machine permettant d'appliquer un effort de compression entre lesdits plateaux, ce dispositif étant caractérisé par le fait qu'il comprend deux plaques aptes à être intercalées entre les plateaux et délimitant entre elles un espace isolant sous vide, et au moins un organe déformable prenant appui sur chacune de ces plaques, cet organe occupant un état expansé dans lequel les plaques sont isolées thermiquement l'une de l'autre par l'espace isolant sous vide, lorsque ledit effort n'est pas appliqué alors que, lorsque l'effort de compression est appliqué, ledit organe occupe un état comprimé dans lequel les plaques sont en contact thermique l'une contre l'autre.

Lorsqu'un dispositif ainsi conçu est placé entre un outillage chauffant et le plateau refroidi d'une presse, l'outillage chauffant est thermiquement isolé du reste de la machine, de telle sorte que le chauffage de la pièce est assuré avec des pertes thermiques minimales, c'est-à-dire avec un excellent rendement thermique.

A l'inverse, les deux plaques du dispositif viennent en contact thermique l'une avec l'autre dès qu'un effort de pression suffisant est appliqué entre elles, ce qui permet d'assurer un refroidissement efficace de la pièce soumise à cet effort de pression, à l'aide du plateau refroidi de la machine.

Selon le cas, le ou les organes déformables du dispositif selon l'invention peuvent être élastiques ou plastiques. Dans le premier cas, le dispositif peut être placé à demeure sur la machine et les interventions limitées à la maintenance traditionnelle de celle-ci. Dans le second cas, il est nécessaire de remplacer l'organe déformable à chaque fois que la machine est actionnée.

Dans un premier mode de réalisation de l'invention, l'organe déformable est un organe étanche et fermé, qui est interposé entre les parties périphériques des plaques et qui délimite intérieurement l'espace isolant sous vide, cet espace s'étendant entre les plaques lorsque l'organe étanche occupe son état expansé.

Dans certains cas, un élément rigide, qui peut être démontable et/ou thermiquement isolant, fait partie d'un empilement placé entre les plaques et comprenant l'organe déformable.

Dans un deuxième mode de réalisation de l'invention, le dispositif comprend plusieurs organes déformables, répartis entre les plaques et prenant appui dans des cavités isolées thermiquement, formées dans les surfaces en vis-à-vis des deux plaques, des moyens d'étanchéité thermiquement isolants reliant les bords périphériques des plaques et délimitant intérieurement l'espace isolant sous vide, qui s'étend entre les plaques lorsque les organes occupent leur position expansée.

Dans ce cas, les moyens d'étanchéité peuvent comprendre une couronne en un matériau thermiquement isolant et des joints d'étanchéité interposés entre cette couronne et les bords périphériques des plaques.

Afin de favoriser le contact thermique entre les plaques lors de l'application d'une force de compression sur le dispositif, la plaque adjacente au plateau de refroidissement est recouverte d'une couche de matériau ductile, sur sa face tournée vers l'autre plaque.

Si l'on désire que le refroidissement de la pièce ne soit pas le même selon les zones de la pièce considérées, il est possible de recouvrir la plaque adjacente au plateau chauffant d'une feuille de conduction formée d'éléments de feuilles juxtaposés, réalisés en matériaux de conductions thermiques différentes, sur sa face tournée vers l'autre plaque.

Afin d'améliorer encore la qualité de l'isolation thermique qui est obtenue lorsque les deux plaques du dispositif sont séparées par le vide, il est possible de donner à ta surface de la plaque adjacente au plateau de refroidissement un caractère réfléchissant et de recouvrir la surface en regard de la plaque adjacente au plateau chauffant d'un corps noir.

Différents modes de réalisation du dispositif selon l'invention vont à présent être décrits, à titre d'exemples non limitatifs, en se référant aux dessins annexés, dans lesquels :
- la figure 1 est une vue de face en coupe partielle représentant de façon schématique une presse dont tes deux plateaux agissent sur un outillage chauffant par l'intermédiaire de deux dispositifs à conduction thermique variable conformes à l'invention ;
- la figure 2 est une vue de face en coupe verticale illustrant à plus grande échelle un dispositif à conduction thermique variable selon un premier mode de réalisation de l'invention ;
- la figure 3 est une vue en coupe schématique selon la ligne III de la figure 2 ;
- les figures 4a et 4b sont des vues en coupe verticale comparables à la figure 2, illustrant un deuxième mode de réalisation du dispositif selon l'invention, respectivement dans son état expansé et dans son état comprimé ;
- la figure 5 est une vue en coupe verticale comparable à la figure 2 illustrant une variante du deuxième mode de réalisation de l'invention ;
- les figures 6a et 6b sont des vues en coupe verticale comparables aux figures 4a et 4b, illustrant une deuxième variante du dispositif illustré sur ces figures ; et
- la figure 7 est une vue en coupe verticale comparable à la figure 5, illustrant une autre variante du deuxième mode de réalisation de l'invention, dans le cas où l'organe déformable qui est interpose entre les plaques est un organe plastique.

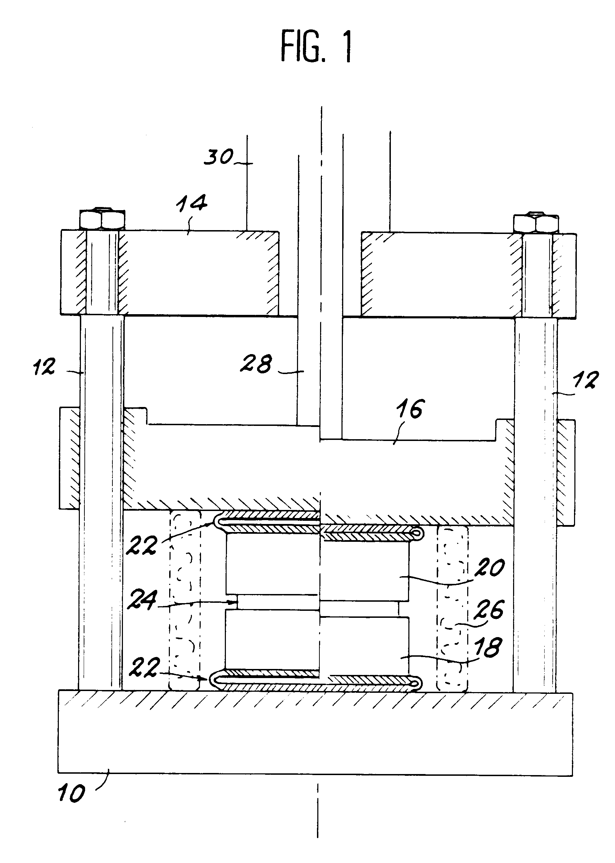

Sur la figure 1, on a représenté de façon très schématique une presse équipée de deux dispositifs à conduction thermique variable réalisés conformément à l'invention. Cette presse comporte un bâti inférieur (non représenté), sur lequel est monté un plateau de refroidissement inférieur 10 équipé de moyens de refroidissement (non représentés). Ces moyens de refroidissement comprennent généralement une canalisation dans laquelle on fait circuler un fluide de refroidissement à basse température, lorsqu'un refroidissement de la pièce est désiré.

Le bâti de la machine supporte aux quatre coins du plateau inférieur de refroidissement 10 quatre colonnes de guidage verticales 12 dont les extrémités hautes sont fixées aux quatre coins d'une plaque supérieure 14 du bâti.

Un plateau supérieur de refroidissement 16, équipé intérieurement de moyens de refroidissement (non représentés) analogues à ceux qui équipent le plateau inférieur 10, est reçu de façon coulissante sur les colonnes de guidage verticales 12.

Sur leurs faces en vis-à-vis, les plateaux de refroidissement inférieur 10 et supérieur 16 portent respectivement un plateau chauffant inférieur 18 et un plateau chauffant supérieur 20, par l'intermédiaire de deux dispositifs à conduction thermique variable 22 réalisés conformément à l'invention. Chacun des plateaux chauffants 18 et 20 est équipé intérieurement de moyens de chauffage (non représentés) constitués par exemple par des résistances chauffantes ou par tout moyen équivalent. Les dispositifs à conduction thermique variable 22 conformes à l'invention sont illustrés de façon très schématique sur les moitiés gauche et droite de la figure 1, respectivement dans leur état expansé et dans leur état comprimé.

Entre le plateau chauffant inférieur 18 et le plateau chauffant supérieur 20 est placé un outillage 24 tel qu'un moule dans lequel ont été introduits au préalable les éléments constitutifs de la pièce à fabriquer.

Afin d'éviter tes pertes de chaleur par convection lors de la mise en oeuvre des moyens de chauffage équipant les plateaux chauffants 18 et 20, un organe annulaire thermiquement isolant 26 est placé autour de l'empilement formé par l'outillage 24, les plateaux chauffants 18 et 20 et les dispositifs 22, entre les plateaux de refroidissement 10 et 16. Cet organe annulaire isolant présente de préférence, en vue de dessus, une forme circulaire, de même que les bords périphériques des plateaux 18 et 20 et des dispositifs 22.

Le plateau supérieur de refroidissement 16 est relié en son centre, par une tige de poussée verticale 28, à un organe 30, tel qu'un vérin, monté sur le plateau supérieur du châssis 14 et apte à appliquer sur te plateau de refroidissement supérieur 16 une force de pression verticale, dirigée vers le bas, qui a pour effet de faire passer les dispositifs 22 dans leur état comprimé illustré sur la partie droite de la figure 1. Comme on le verra plus en détail par la suite, lorsqu'ils sont dans cet état comprimé les dispositifs 22 assurent une très bonne conduction thermique entre les plateaux chauffants 18 et 20 d'une part et les plateaux de refroidissement 10 et 16 d'autre part.

Au contraire, lorsque le vérin 30 n'est pas actionné, les dispositifs 22 selon l'invention occupent leur état expansé illustré sur la moitié gauche de la figure 1, dans lequel les plateaux chauffants 18 et 20 sont isolés thermiquement des plateaux de refroidissement 10 et 16 respectivement.

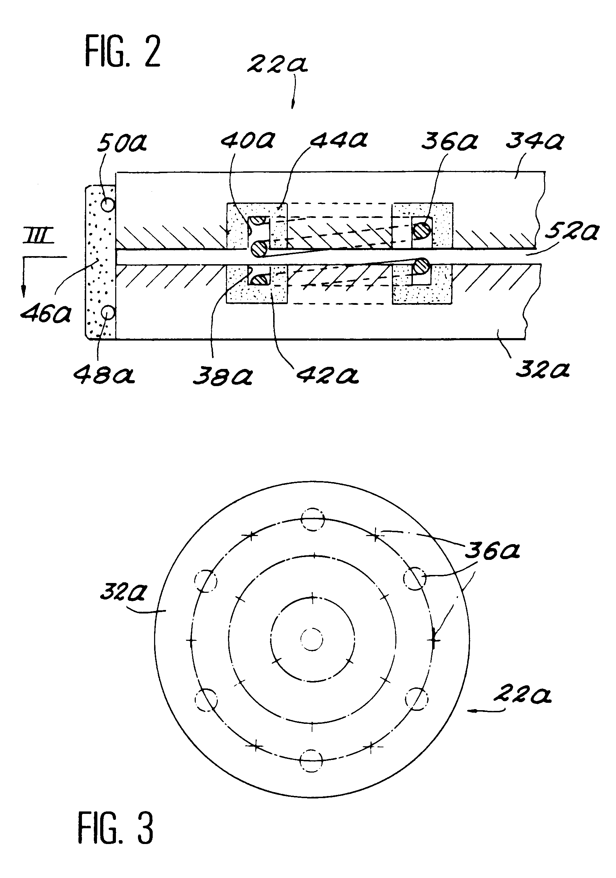

Différents modes de réalisation des dispositifs 22 à conduction thermique variable conformes à l'invention vont à présent être décrits en se référant successivement aux figures 2 à 7.

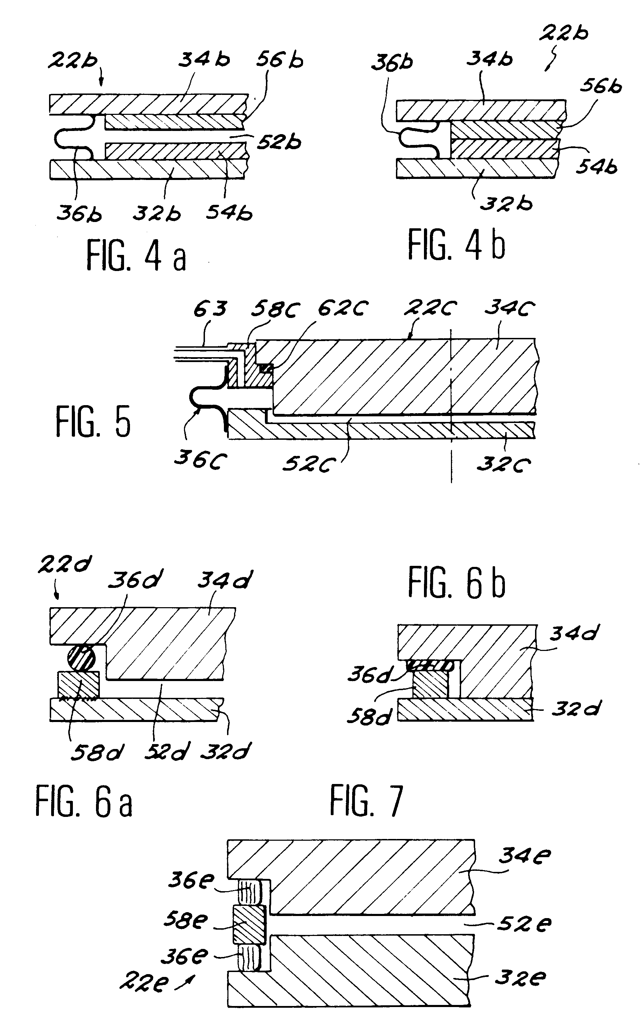

Dans chacun des modes de réalisation et des variantes qui vont à présent être décrits, les éléments correspondants seront désignés par un même chiffre de référence, affecté d'une lettre différente. Ainsi, dans te premier mode de réalisation du dispositif à conduction thermique variable conforme à l'invention tel qu'illustré sur les figures 2 et 3, Ce dispositif est désigné de façon générale par la référence 22a.

Le dispositif 22a comprend deux plaques circulaires, planes et parallèles 32a et 34a, réalisées en un matériau thermiquement conducteur tel que de l'acier inoxydable, et de préférence de faible épaisseur. Dans ce mode de réalisation, le dispositif 22a comprend de plus plusieurs organes déformables 36a interposés entre les plaques 32a et 34a et régulièrement répartis entre ces plaques, par exemple selon trois cercles concentriques, comme on l'a représenté de façon très schématique sur la figure 3.

Comme le montre la figure 2, chacun des organes déformables 36a est constitué dans ce cas par un ressort hélicoïdal dont les extrémités sont reçues et prennent appui dans des cavités annulaires 38a et 40a formées respectivement dans les surfaces en vis-à-vis des plaques 32a et 34a. Chacune des cavités 38a et 40a est isolée thermiquement de la plaque correspondante par un bloc de matériau isolant 42a et 44a, respectivement.

Les caractéristiques des ressorts constituant les organes déformables 36a sont telles que les surfaces en vis-à-vis des plaques 32a et 34a sont normalement espacées l'une de l'autre de quelques millimètres, comme l'illustre la figure 2. L'espace 52a ainsi formé entre tes plaques est clos, dans l'exemple représenté, par un organe 46a étanche et fermé, en forme de couronne, qui est monté autour des plaques 32a et 34a. Deux joints d'étanchéité annulaires 48a et 50a montés dans cet organe 46a sont respectivement en contact étanche avec les bords périphériques des plaques 32a et 34a. Cet organe 46a est réalisé en un matériau thermiquement isolant tel qu'une céramique.

L'espace clos 52a formé entre les plaques 32a et 34a et dé limité extérieurement par l'organe 46a et mis sous vide, de façon à former un espace isolant entre les plaques. Cette mise sous vide de l'espace 52a peut être réalisée de n'importe quelle manière, par exemple au moyen d'une tuyauterie (non représentée) raccordée à une installation de vide et débouchant à la périphérie de l'espace 52a, au travers de l'organe 46a.

Tant que le dispositif 22a illustré sur les figures 2 et 3 n'est pas soumis à une force de compression qui excéde la force emmagasinée dans les ressorts constituant les organes déformables 36a, ce dispositif occupe son état expansé illustré sur la figure 2, dans lequel il existe une très bonne isolation thermique entre les plaques 32a et 34a. Dans cet état expansé des dispositifs 22a, les moyens de chauffage contenus dans les plateaux chauffants 18 et 20 de la presse illustrée sur la figure 1 peuvent donc être mis en oeuvre avec un rendement maximal, puisque les plateaux chauffants 18 et 20 sont thermiquement isolés des plateaux de refroidissement 10 et 16 par le vide qui existe entre les plaques 32a et 34a des dispositifs 22a.

Au contraire, lorsqu'une force de pression excédant la précontrainte emmagasinée dans les ressorts constituant les organes déformables 36a est appliquée sur le dispositif 22a, les faces en vis-à-vis des plaques 32a et 34a viennent en contact l'une contre l'autre, de sorte qu'il existe une bonne conduction thermique entre les plaques. Par conséquent, si les moyens de chauffage équipant les plateaux 18 et 20 sont arrêtés et les moyens de refroidissement équipant les plateaux 10 et 16 mis en oeuvre, le refroidissement de la pièce au travers des dispositifs 22a s'effectue dans les meilleures conditions.

En se référant aux figures 4a et 4b, on décrira à présent un deuxième mode de réalisation de l'invention, dans lequel tes organes déformables qui sont interposés entre les faces en regard des deux plaques dans le mode de réalisation qui vient d'être décrit sont remplacés par un organe déformable unique reliant les plaques à leur périphérie.

De façon plus précise et comme l'illustrent les figures 4a et 4b, dans ce deuxième mode de réalisation de l'invention le dispositif à conduction thermique variable 22b comprend un organe déformable unique 36b, étanche et fermé, présentant la forme d'un soufflet annulaire réalisé en un matériau élastique tel que de l'acier inoxydable. Les extrémités de cet organe déformable 36b en forme de soufflet sont raccordées de façon étanche à la périphérie de deux plaques 32b et 34b dont la structure et la fonction sont comparables à celles des plaques 32a et 34a dans le premier mode de réalisation décrit en référence aux figures 2 et 3.

Les extrémités de l'organe 36b en forme de soufflet peuvent notamment être soudées directement sur les faces en vis-à-vis des plaques 32b et 34b, à proximité du bord périphérique de ces plaques, comme l'illustrent les figures 4a et 4b.

Dans ce mode de réalisation, l'organe déformable 36b a pour double fonction d'assurer l'écartement des plaques 32b et 34b dans l'état expansé du dispositif illustré sur la figure 4a et d'assurer la fermeture périphérique de l'espace 52b qui est alors formé entre les plaques 32b et 34b.

Afin que les surfaces en vis-à-vis des plaques 32b et 34b puissent venir en appui l'une contre l'autre lorsque l'organe 36b est comprimé par l'actionnement de la presse, malgré l'épaisseur de cet organe 36b, les extrémités de cet organe peuvent être soudées sur des épaulements formés sur les faces en vis-à-vis des deux plaques, à proximité de leurs bords périphériques.

Comme ce la est illustré sur les figures 4a et 4b, les faces en vis-à-vis des plaques 32b et 34b peuvent aussi être planes et revêtues, à l'intérieur de l'organe annulaire 36b, respectivement d'une feuille de conduction 54b pour la plaque 32b et d'une couche de matériau ductile 56b pour la plaque 34b. Les épaisseurs de la feuille 54b et de la couche 56b sont alors supérieures à l'épaisseur de l'organe 36b à l'état comprimé (figure 4b).

Il est à noter que la présence sur les faces en vis-à-vis des deux plaques du dispositif d'une couche de matériau ductile telle que la couche 56b pour la plaque prévue pour être en contact avec le plateau de refroidissement et d'une feuille de conduction pour la plaque prévue pour être en contact avec le plateau chauffant est recommandée dans tous les modes de réalisation de l'invention, y compris dans le mode de réalisation décrit précédemment en se référant aux figures 2 et 3.

La couche de matériau ductile 54b est réalisée en un matériau tel que l'aluminium présentant à la fois une excellente conduction thermique et un caractère ductile à la température de chauffage de la pièce. Elle permet, lors de l'application de la pression telle qu'illustrée sur la figure 4b d'adapter parfaitement la surface de la plaque 34b en contact avec la plaque 32b. Le contact thermique entre les deux plaques s'en trouve ainsi grandement amélioré.

Par ailleurs, la feuille de conduction 54b est avantageusement constituée de plusieurs éléments de feuilles juxtaposées, qui sont tous réalisés en des matériaux thermiquement conducteurs. Cependant, ces matériaux sont choisis afin de présenter des conductions thermiques différentes selon les zones de la pièce en vis-à-vis, ce qui permet de réaliser un refroidissement contrôlé, à des vitesses différentes d'une zone à l'autre.

La mise en oeuvre du dispositif 22b qui vient d'être décrit en se référant aux figures 4a et 4b est par ailleurs totalement identique à celle du dispositif 22a décrit précédemment en se référant aux figures 2 et 3.

Sur la figure 5, on a représenté une variante du deuxième mode de réalisation du dispositif selon l'invention. Dans cette variante, le dispositif 22c comporte également deux plaques 32c et 34c reliées de façon étanche à leur périphérie par un organe annulaire 36c en forme de soufflet élastique. Cependant, seule l'une des extrémités de l'organe 36c est soudée sur un bord périphérique de la plaque 34c apte à être en contact avec le plateau de refroidissement. La deuxième extrémité de l'organe 36c est soudée sur un bord périphérique d'un élément annulaire 58c qui est en appui par un épaulement sur un épaulement en vis-à-vis de la plaque 32c apte à être en contact avec le plateau chauffant. L'étanchéité entre cet élément annulaire 58c et la plaque 60c est alors obtenue au moyen d'un joint d'étanchéité annulaire 62c logé dans une gorge formée dans l'épaulement de l'élément annulaire 58c.

Dans cette variante de réalisation illustrée sur la figure 5, te caractère démontable de l'élément 58c permet de démonter le dispositif, ce qui autorise notamment la modification ou le remplacement de la plaque 34c. Cette plaque 34c usinée dans un matériau bon conducteur de la chaleur tel que du cuivre, est apte à venir en contact direct avec la majeure partie de la surface de la plaque 32c, lorsqu'un effort de compression est appliqué entre tes plateaux.

Dans l'exemple de réalisation illustré sur la figure 5, l'élément annulaire 58c est de préférence un élément métallique, afin de faciliter la soudure de l'extrémité correspondante de l'organe annulaire 36c.

Par ailleurs, il est à noter que le joint d'étanchéité 62c est situé au coeur des parties froides du dispositif 22c, ce qui permet de le réaliser en un matériau élastomère classique.

En outre, on a représenté sur la figure 5, un exemple de réalisation d'une canalisation 63 traversant l'élément annulaire 58c, de façon à relier l'espace inter-plaques 52c à une installation de vide (non représentée).

Dans les réalisations qui viennent d'être décrites en se référant aux figures 4a et 4b puis à la figure 5, les organes annulaires 36b et 36c constituent des ponts thermiques par lesquels une légère fuite thermique par conduction peut se produire lorsque le dispositif occupe son état expansé. Cette fuite thermique est généralement acceptable.

Dans les cas où une isolation thermique complète entre les plaques du dispositif est souhaitée, on peut utiliser un agencement comparable à ce lui de la figure 5, en réalisant l'élément annulaire 58c en un matériau thermiquement isolant tel qu'une céramique. Une solution de ce type va à présent être décrite en se référant aux figures 6a et 6b.

Dans ce cas, le dispositif 22d selon l'invention comprend, en plus des deux plaques 32d et 34d, un organe élastique annulaire 36d, qui peut notamment prendre la forme d'un joint torique en caoutchouc. Ce joint torique prend appui, d'une part, directement sur la plaque 34d et, d'autre part, sur un élément annulaire 58d interposé entre le joint et la plaque 32d et réalisé en un matériau thermiquement isolant tel qu'une céramique. L'étanchéité entre t'élément annulaire 58d et la plaque 32d peut être réalisée au moyen d'un joint d' étanchéité comme cela a été décrit en se référant à la figure 5 ou par tout autre moyen équivalent.

Sur la figure 7 on a représenté une autre variante du dispositif à conduction thermique variable selon l'invention, dans laquelle t'organe déformable qui est interposé entre les plaques est un organe plastique qui doit être remplacé après chaque mise en oeuvre du dispositif.

De façon plus précise, le dispositif 22e illustré sur la figure 7 comprend comme précédemment deux plaques 32e et 34e thermiquement conductrices. Entre les périphéries de ces plaques est placé un empilement constitué par un élément annulaire 58e, en un matériau thermiquement isolant tel qu'une céramique, interposé entre deux joints plastiques 36e, par exemple en carbone feuilleté. Chacun de ces joints 36e est directement en contact avec l'élément annulaire 58e, qui assure l'isolation thermique entre les plaques, et avec chacune des plaques 32e et 34e.

Dans toutes les réalisations décrites précédemment, ainsi que dans les variantes non décrites qui en découlent, l'espace formé encre les deux plaques du dispositif est placé sous vide à l'aide d'un circuit (non représenté) débouchant dans cet espace. Une excellente isolation thermique entre les deux plaques et, par conséquent, entre les plateaux de la machine qui sont en contact avec ces plaques, est ainsi réalisée tant qu'un effort de compression suffisant pour amener tes plaques en contact l'une avec l'autre n'est pas appliqué sur le dispositif.

Cette isolation thermique est avantageusement améliorée en réduisant les pertes thermiques par convexion. Cela est obtenu en donnant à ta surface de la plaque qui est en contact avec le plateau de refroidissement un caractère réfléchissant permettant de renvoyer la chaleur arrivant par rayonnement de la plaque en contact avec le plateau chauffant. De plus, la surface de la plaque en contact avec le plateau chauffant est avantageusement revêtue d'un corps noir qui lui permet d'absorber les rayonnements réfléchis par la surface réfléchissante de l'autre plaque.

Bien entendu, les surfaces en question sont soit les surfaces des plaques lorsque celles-ci ne sont pas revêtues d'une couche de matériau ductile ou d'une feuille de conduction, soit les surfaces de cette couche ou de cette feuille lorsqu'elles sont présentes.

Dans tous les cas, lorsqu'un effort de compression suffisant pour comprimer l'organe déformable du dispositif est exercé par la machine, les deux plaques du dispositif viennent en contact thermique l'une contre l'autre, de sorte qu'une excellente conduction thermique est alors établie entre te plateau chauffant et te plateau de refroidissement de la machine. Un refroidissement efficace de la pièce peut a lors être effectué grâce aux moyens de refroidissement équipant ce dernier plateau.

Comme on l'a déjà mentionné, l'insertion d'un ou plusieurs dispositifs conformes à l'invention dans une machine telle qu'une presse permet notamment d'améliorer sensiblement la fabrication d'une pièce par thermoformage ainsi que la fabrication des matériaux composites à matrice métallique. En effet, dans les deux cas, le cycle de fabrication comporte une première étape au cours de laquelle ta pièce doit être chauffée sans application de pression et une étape terminale au cours de laquelle la pièce doit être refroidie et compressée simultanément.

Bien entendu, l'invention n'est pas limitée aux modes de réalisation qui viennent d'être décrits à titre d'exemple, mais en couvre toutes les variantes.

Ainsi, on comprendra notamment que l'organe déformable qui prend appui sur les deux plaques du dispositif peut aussi être constitué par un matériau ayant pour propriété d'être thermiquement isolant dans son état expansé, tout en devenant thermiquement conducteur lorsqu'il est soumis à une force de compression dépassant un certain seuil.

En outre, les différents modes de réalisation et variantes décrites peuvent être combinés. Ainsi, les ressorts de compression placés entre les plaques du dispositif dans le premier mode de réalisation décrit peuvent être remplacés par des organes plastiques comparables aux organes 36e sur la figure 7.

## Revendications

1. Dispositif à conduction thermique variable, prévu pour être intercalé entre un plateau chauffant (18,20) et un plateau de refroidissement (10,16) d'une machine permettant d'appliquer un effort de compression entre lesdits plateaux, ce dispositif étant caractérisé par le fait qu'il comprend deux plaques (32a,34a) aptes à être intercalées entre les plateaux, et au moins un organe déformable (36a,b..) prenant appui sur chacune de ces plaques (32a,b..,34a,b..), cet organe occupant un état expansé dans lequel les plaques sont isolées thermiquement l'une de l'autre, lorsque ledit effort n'est pas appliqué alors que, lorsque l'effort de compression est appliqué, ledit organe occupe un état comprimé dans lequel les plaques sont en contact thermique l'une contre l'autre.

2. Dispositif selon la revendication 1, caractérisé par le fait que ledit organe déformable est un organe élastique (36a,b..d).

3. Dispositif selon la revendication 1, caractérisé par le fait que ledit organe déformable est un organe plastique (36e).

4. Dispositif selon l'une quelconque des revendications précédentes, caractérisé par le fait que ledit organe déformable comprend au moins un organe étanche (36b,..e) interposé entre lesdites plaques et délimitant intérieurement un espace isolant sous vide (52b,..e) qui s'étend entre les plaques lorsque ledit organe occupe son état expansé.

5. Dispositif selon la revendication 4, caractérisé par le fait que ledit organe déformable (36c,d,e) appartient à un empilement comprenant au moins un élément annulaire rigide et étanche (58c,d,e).

6. Dispositif selon la revendication 5, caractérisé par le fait que ledit élément annulaire (58c) est fixé à l'une des plaques (32c) par des moyens de fixation démontables (60c).

7. Dispositif selon l'une quelconque des revendications 5 et 6, caractérisé par le fait que ledit élément annulaire (58d,e) est réalisé en un matériau thermiquement isolant.

8. Dispositif selon l'une quelconque des revendications 1 à 6, caractérisé par le fait qu'il comprend plusieurs organes déformables (36a) répartis entre les plaques et prenant appui dans des cavités (38a, 40a) isolées thermiquement, formées dans des surfaces en vis-à-vis des plaques, des moyens d'étanchéité (46a, 48a) thermiquement isolants reliant des bords périphériques des plaques et délimitant intérieurement un espace isolant sous vide (52a), qui s'étend entre tes plaques lorsque lesdits organes occupent leur position expansée.

9. Dispositif selon la revendication 8, caractérisé par le fait que les moyens d'étanchéité comprennent une couronne (46a) en un matériau thermiquement isolant, et des joints d'étanchéité (48a) interposés entre ladite couronne et les bords périphériques des plaques.

10. Dispositif selon l'une quelconque des revendications précédentes, caractérisé par le fait que ta plaque adjacente au plateau de refroidissement (10, 16) est recouverte d'une couche de matériau ductile (56b,c), du côté du plateau chauffant (18, 20).

11. Dispositif selon l'une quelconque des revendications précédentes, caractérisé par le fait que la plaque adajacente au plateau chauffant (18, 20) est recouverte d'une feuille de conduction (54b,c) formée d'éléments de feuille juxtaposés réalisés en matériaux de conductions thermiques différentes, du côté du plateau de refroidissement (10, 16).

12. Dispositif selon l'une quelconque des revendications précédentes, caractérisé par le fait que les surfaces en regard des plaques adjacentes au plateau de refroidissement (10, 16) et au plateau chauffant (18, 20) sont respectivement réfléchissante et recouverte d'un corps noir.

## Claims

1. Variable heat conduction device for insertion between a heating platen (18, 20) and a cooling platen (10, 16) of a machine making it possible to apply a compressive stress between the said platens, said device being characterized in that it comprises two plates (32a, 34a), which can be inserted between the platens and define between them a vacuum insulating space, and at least one deformable member (36a, b) bearing on each of the said plates (32a, b, 34a, b), said member occupying an expanded state in which the plates are thermally insulated from one another by the vacuum insulation space when said stress is not applied, whereas, when the compressive stress is applied, the member occupies a compressed state in which the plates are in thermal contact with one another.

2. Device according to claim 1, characterized in that the deformable member is an elastic member (32a, b, ... d).

3. Device according to claim 1, characterized in that the deformable member is a plastic member (36e).

4. Device according to any one of the preceding claims, characterized in that the deformable member also comprises a tight member (36b, ... e) interposed between the said plates and internally defining said vacuum insulating space (52b ... e), extending between the plates when said member occupies its expanded state.

5. Device according to claim 4, characterized in that the deformable member (36c, d, e) belongs to a stack having at least one rigid, tight annular element (58c, d, e).

6. Device according to claim 5, characterized in that the annular element (58c) is fixed to one of the plates (32c) by dismantlable fixing means (60c).

7. Device according to either of the claims 5 and 6, characterized in that said annular element (58d, e) is made from a thermally insulating material.

8. Device according to any one of the claims 1 to 6, characterized in that it comprises several deformable members (36a) distributed between the plates and bearing in thermally insulated cavities (38a, 40a), formed in facing surfaces of the plates, thermally insulating sealing means (46a, 48a) connecting the peripheral edges of the plates and internally defining said vacuum insulating space (52a), which extends between the plates when said members occupy their expanded position.

9. Device according to claim 8, characterized in that the sealing means comprise a ring (46a) of a thermally insulating material, and sealing joints (48a) interposed between the said ring and the peripheral edges of the plates.

10. Device according to any one of the preceding claims, characterized in that the plate adjacent to the cooling platen (10, 16) is covered with a ductile material layer (56b, c) on the side of the heating platen (18, 20).

11. Device according to any one of the preceding claims, characterized in that the plate adjacent to the heating platen (18, 20) is covered by a conduction sheet (54b, c) formed from juxtaposed sheet elements made from different heat conduction materials on the side of the cooling platen (10, 16).

12. Device according to any one of the preceding claims, characterized in that the facing surfaces of the plates adjacent to the cooling platen (10, 16) and the heating platen (18, 20) are respectively reflecting and covered by a black body.

## Patentansprüche

1. Vorrichtung mit variabler Wärmeleitung, vorgesehen um eingefügt zu werden zwischen eine Heizgrundplatte (18, 20) und eine Kühlgrundplatte (10, 16) einer Maschine, die ermöglicht, eine Druckkraft zwischen den genannten Grundplatten auszuüben, wobei diese Vorrichtung dadurch gekennzeichnet ist, daß sie zwei Platten (32a,34a) umfaßt, die geeignet sind, zwischen die Grundplatten eingefügt zu werden, und wenigstens ein verformbares Organ (36a,b..), das sich auf jeder dieser Platten (32a,b..,34a,b..) abstützt, wobei dieses Organ einen ausgedehnten Zustand einnimmt, bei dem die Platten thermisch voneinander isoliert sind, wenn die genannte Kraft nicht ausgeübt wird, während, wenn die Druckkraft ausgeübt wird, das besagte Organ einen zusammengedrückten Zustand einnimmt, bei dem die Platten thermischen Kontakt miteinander haben.

2. Vorrichtung nach Anspruch 1, dadurch gekennzeichnet, daß das genannte verformbare Organ ein elastisches Organ (36a,b..d) ist.

3. Vorrichtung nach Anspruch 1, dadurch gekennzeichnet, daß das verformbare Organ ein plastisches Organ (36e) ist.

4. Vorrichtung nach einem der vorhergehenden Ansprüche, dadurch gekennzeichnet, daß das genannte verformbare Organ wenigstens ein dichtes Organ (36b,..e) umfaßt, eingefügt zwischen die genannten Platten und innen einen Isolationsraum unter Vakuum abgrenzend (52b,..e), der sich zwischen den Platten erstreckt, wenn das besagte Organ seinen ausgedehnten Zustand einnimmt.

5. Vorrichtung nach Anspruch 4, dadurch gekennzeichnet, daß das genannte verformbare Organ (36c,d,e) zu einem Stapel gehört, der wenigstens ein steifes und dichtes ringförmiges Element (58c,d,e) umfaßt.

6. Vorrichtung nach Anspruch 5, dadurch gekennzeichnet, daß das besagte ringförmige Element (58c) befestigt ist an einer der Platten (32c) mittels demontierbaren Befestigungseinrichtungen (60c).

7. Vorrichtung nach einem der Ansprüche 5 und 6, dadurch gekennzeichnet, daß das besagte ringförmige Element (58d,e) hergestellt ist aus einem thermisch isolierenden Material.

8. Vorrichtung nach einem der Ansprüche 1 bis 6, dadurch gekennzeichnet, daß es mehrere verformbare Organe (36a) umfaßt, verteilt zwischen den Platten und sich abstützend in thermisch isolierten Hohlräumen (38a, 40a), ausgebildet in den Platten gegenüberstehenden Oberflächen, wobei thermisch isolierende Dichtungseinrichtungen (46a, 48a) Umfangsränder der Platten verbinden und innen einen Isolationsraum unter Vakuum (52a) begrenzen, der sich zwischen den Platten erstreckt, wenn die genannten Organe ihre ausgedehnte Stellung einnehmen.

9. Vorrichtung nach Anspruch 8, dadurch gekennzeichnet, daß die Dichtungseinrichtungen einen Kranz (46a) aus einem thermisch isolierenden Material umfassen und Dichtringe (48a), die eingefügt sind zwischen den besagten Kranz und die Umfangsränder der Platten.

10. Vorrichtung nach einem der vorhergehenden Ansprüche, dadurch gekennzeichnet, daß die der Kühlgrundplatte (10, 16) benachbarte Platte auf der Seite der Heizgrundplatte (18, 20) bedeckt ist mit einer Schicht aus einem formbaren Material (56b,c).

11. Vorrichtung nach einem der vorhergehenden Ansprüche, dadurch gekennzeichnet, daß die der Heizgrundplatte (18, 20) benachbarte Platte auf der Seite der Kühlgrundplatte (10, 16) bedeckt ist mit einer Leitungsfolie (54b,c), gebildet aus verbundenen Folienelementen, hergestellt aus Materialien mit unterschiedlichen Wärmeleitfähigkeiten.

12. Vorrichtung nach einem der vorhergehenden Ansprüche, dadurch gekennzeichnet, daß die Oberflächen gegenüber den der Kühlgrundplatte (10, 16) und der Heizgrundplatte (18, 20) benachbarten Platten jeweils reflektierend sind und bedeckt mit einem schwarzen Körper.
